(19) **Europäisches Patentamt**
**European Patent Office**
**Office européen des brevets**

(11) **EP 2 899 602 A1**

(12) **EUROPEAN PATENT APPLICATION**

(43) Date of publication:
**29.07.2015 Bulletin 2015/31**

(51) Int Cl.:
***G05B 13/02*** *(2006.01)*

(21) Application number: **14152501.4**

(22) Date of filing: **24.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Sivalingam, Selvanathan**
**7044 Trondheim (NO)**

(74) Representative: **Maier, Daniel Oliver et al**
**Siemens AG**
**Postfach 22 16 34**
**80506 München (DE)**

(54) **Determining a controller performance measure**

(57) It is described a method and arrangement for determining a performance measure ($\eta$) of a second controller (331) adapted to control a system (209,309), the method comprising: obtaining first system input data (201) and first system output data (203), while a first controller (211) receives the first system output data (203) and supplies first controller output (201) to the system (209) as the first system input data, the first controller (211) comprising a relay controller; estimating a system delay ($\tau$) between the first system input data (201) and the first system output data (203) using a Hilbert transform relations method (103) based on the first system input data (201) and the first system output data (203); obtaining second system output data (303), while the second controller (331) receives a difference (329) between second system output data (303) and reference data (325) and supplies second controller output (333) to the system (309) as second system input data; estimating a minimum system output variance ($\sigma_{MV}^2$) based on the estimated system delay ($\tau$) and an impulse response of the system; and estimating the performance measure ($\eta$) based on the estimated minimum system output variance ($\sigma_{MV}^2$) and a variance ($\sigma_y^2$) of the second system output data.

FIG 1

**Description**

Field of invention

The present invention relates to a method and to an arrangement for determining a performance measure of a controller which is adapted to control a system, in particular a single input/single output (SISO) system.

Art Background

Estimation of the most famous control loop performance measure, Harris index, needs a priori information on the system time delay which is not known. Thereby, conventional methods to determine a control loop performance measure may involve setting different system delays by trial and error and use these to calculate a number of Harris indices from which finally the lowest may be selected to represent a true estimation of the control loop performance measure. However, this is very cumbersome and time-consuming and also requires high computational efforts. In particular, it may be a usual practice to assume a range of time delay values in a diophantine equation while estimating minimum variance from routine operating data. Hence, according to the conventional methods and systems, an accurate measure that relates to control loop performance using minimum variance could not be found.

There may be a need for a method and for an arrangement for determining a performance measure of a controller (hereinafter referred to as second controller) which is adapted to control a system, in particular a single input single output (SISO) system, which requires less computational efforts, which is simpler and which requires less computational time compared to a conventional method.

Summary of the Invention

This need may be met by the subject matter according to the independent claims. Advantageous embodiments of the present invention are described by the dependent claims.

According to an embodiment of the present invention, it is provided a method for determining a performance measure of a second controller (e.g. a PI controller, a PID controller or the like) adapted to control a system (in particular physical system, e.g. system in which to maintain a temperature according to a reference temperature), the method comprising obtaining first system input data and first system output data, while a first controller receives the first system output data and supplies first controller output to the system as the first system input data, the first controller comprising a relay controller; estimating a system delay between the first system input data and the first system output data using a Hilbert transform relations method based on the first system input data and the first system output data; obtaining second system output data, while the second controller receives a difference between second system output data and reference data and supplies second controller output to the system as second system input data; estimating a minimum system output variance based on the estimated system delay and an impulse response of the system; and estimating the performance measure based on the estimated minimum system output variance and a variance of the second system output data.

The second controller may also be referred to as normal operation controller and the first controller may also be referred to as a relay controller.

The system may represent any technical system or technical process which upon providing input data produces some output data. The input data and/or the output data (e.g. electrical and/or optical signals) may for example be scalar values changing with time or may for example be or comprise one or more components, such as representing vector quantities, which may change with time. For example, the system may for example comprise a heater (or pump) which upon providing the input data (such as control data to control the heater or the pump) generates a particular temperature value (or pressure value or flow rate value) of a substance which is output as the output data.

When supplying a particular input data to the system (such as a control signal), it may take a particular time interval or time span, i.e. the system delay, in order to affect the output data, e.g. a temperature change or a pressure change or a flow rate change. Thereby, in particular, when controlling the system is required or desired, in order to achieve an output value or output data corresponding to reference data, the system delay may be required to be known, in order to configure or tune a controller which may generate the input signal depending on an error signal which may be a difference between the system output and a reference value under normal operating conditions. In particular, the reference value may for example represent a desired temperature, a desired pressure, a desired flow rate, a desired frequency or any other physical quantity which may be produced or influenced by the system when the input data is supplied to the system.

For example, the system may relate to a pharmaceutical process, a physical process, a chemical process, a biological process, an electro/mechanical process or any other technical process. In particular, the process may relate to an offshore process, wherein in particular one or more pumps may be controlled and wherein in particular one or more compressors may be controlled, in order to achieve a particular pressure, a particular flow rate, a particular temperature, etc. of a fluid, such as oil or gas.

The relay controller may be a particular controller (e.g. electronic circuit or (programmable) arithmetic/logical processor) which may selectively output two different output signal values (according to two states), one being a (constant) signal (e.g. 'h') above a reference or nominal signal and the other being a (constant) signal (e.g. '-h') below the nominal signal. In particular, the nominal signal may be zero or may represent zero.

In a first configuration during the method for obtaining the first system input/output data, the relay controller may supply the signal corresponding to the first state, in particular representing a fixed signal strength or signal magnitude to the system as the first system input data. Based on the first system input data, the system may generate the first system output data, such as a particular pressure value, a particular temperature value, a particular flow rate value, a particular frequency, etc., depending on the application and the system. The first system output data may be fed back to the relay controller which may receive the first system output data as an input. When the first system output data are above a nominal output signal, the relay controller may not change the first system input data which are supplied to the system but may keep the first system input data to the system constant. However, when the first system output data fall below the nominal output value or output quantity, the relay controller may change the first system input data supplied to the system to switch to the second state, for example a particular signal magnitude or signal strength below the nominal input data.

Thereby, the relay controller may sense when the first system output data output from the system crosses a particular border, such as a nominal output value. When this crossing of the first system output data occurs, the relay controller may in turn switch the first system input data to alternate between the two states. Thereby, the switching of the first system input data may be dependent on the delay the system is introducing. Thereby, the relay controller may automatically adjust the oscillation frequency of the first system input signal being represented by the switching of the first system input signal between the two states, i.e. a state having a signal magnitude above a nominal input value and another state having a signal strength or magnitude below a nominal magnitude such that the oscillation frequency complies with the system delay.

The method therefore may require to collect process input and output data under two conditions, namely, in the first configuration, under a relay-based tune mode, in order to obtain the first system input data and the first system output data and a second mode or configuration for obtaining the second output data, wherein the system is set under routine operating conditions, i.e. where the second controller is arranged upstream of the system, the system outputs the second system output data and the difference between the second system output data and the reference data is supplied to the second controller which thereupon outputs second controller output which is fed to the system as the second system input data.

In the first mode or configuration, the first controller (in particular comprising a relay controller) is arranged upstream of the system and provides as the first controller output the first system input data to the system, the system outputs the first system output data which are fed as input to the first controller.

In the first mode, where the first controller is arranged upstream of the system, the system delay is estimated. Further, in the second mode, where the second controller is arranged upstream of the system, the minimum system output variance is estimated using the system delay which has been estimated in the first mode. Finally, the performance measure is estimated using the estimated minimum system output variance and a variance of the second system output data, i.e. an actual variance of the system output data under normal operation conditions.

Obtaining the first system input data and the first system output data in the first mode or configuration may in particular be performed when an equilibrium has been reached such that the first system input data are switched with a particular frequency which may have been evolved depending on the system delay produced by the system.

The first/second system input/output data may be measured or may be estimated or may be obtained in another manner. In particular, the input/output data or the system input/output data obtained within the first mode by using the relay-based autotuning method is used to estimate the system time delay using Hilbert transform relations. Subsequently, the value of the time delay may be used in a Diophantine equation to estimate the minimum variance and therefrom the Harris index. Based on the values of the Harris index, poorly performing control loops (i.e. second controllers) may be identified and immediately considered for route course diagnosis. Although relay-based autotuning methods may in practice be for more than two decades, the data obtained from this has not been used for ranking of control loops.

According to embodiments of the present invention, the performance measure may be used to rank control loops based on its performance in a simple manner. Furthermore, an arrangement or tool for performance assessment of control loops may be provided by the present invention.

The impulse response may be represented by system output data when an impulse is provided as input data. An impulse of input data may for example be represented as a single occurrence of a logical one in a sequence of logical values which are all zero except the single one.

Knowledge of the system delay as estimated using the Hilbert transform relations may enable to discard particular coefficients representing an expansion of the impulse response. Thereby, the minimum system output variance may be estimated.

According to an embodiment of the present invention, the performance measure comprises a Harris Index as a ratio between the estimated minimum system output variance and the variance of the second system output data.

The Harris index may be a reliable index for assessing a performance of a control loop, here the second controller.

According to an embodiment of the present invention, estimating the minimum system output variance comprises fitting an autoregressive exogenous model to the impulse response of the system, to obtain impulse response coefficients; summing squares of the impulse response coefficients up to a coefficient associated with the estimated system delay.

The autoregressive eXogeneous model (ARX) model may relate the system output to a sum of values of previous input samples. The fitting may be performed in a z-transform-domain. Embodiments of the present invention may take advantage of the time-shift property of the z-transform, as is known in the art.

According to an embodiment of the present invention, the impulse response is obtained by supplying an impulse input, in particular in a form of a delta peak, as input to the system. While obtaining the impulse response a particular input is supplied to the system without controlling the system neither with the first controller nor with the second controller, the system is thus uncontrolled. In discrete terms, the delta peak may be represented as a sequence of logical false values having only a single logical true value.

According to an embodiment of the present invention, the Hilbert transform relations method comprises estimating from the second input data and the second output data a transfer function associated with the system, the transfer function describing the effect of the system on the second input data to result in the second output data; determining a first phase spectrum as the phase of the estimated transfer function; determining a second phase spectrum based on an absolute value of the estimated transfer function; finding an extreme of an objective function to obtain the system delay, the objective function depending on a difference between the first phase spectrum and the second phase spectrum.

For details of the Hilbert transform relations method it may be referred to EP 13 153 101.4, filed 29 January 2013.

The transfer function (which may be complex valued, i.e. having, for a given frequency, a real value and an imaginary value) may also be referred to as a response function describing the action of the system depending on the input data to produce the output data. The transfer function as well as the first phase spectrum and the second phase spectrum may be defined in a frequency space, i.e. a space which may be obtained from a time domain space by Fourier transformation, for example. Further, the transfer function may be estimated across a number of frequencies, in particular across a particular frequency range. The frequency range may in particular be depending on a frequency of the input data when the equilibrium has been reached, as is explained above.

The first phase spectrum may comprise information regarding the delay introduced by the system, while the second phase spectrum will not contain any information regarding the delay introduced by the system, since it may be obtained from a Hilbert transform of the amplitude spectrum. Thereby, forming a difference between the first phase spectrum and the second phase spectrum may be indicative of the system delay.

In particular, the precise amount of the system delay may be estimated from the difference between the phase spectrum of the minimum phase system (estimated from the Hilbert transform relations) and the phase spectrum of the compound system (estimated from the argument of the cross-spectrum, directly from the input-output data).

In particular, the method (in the first and/or second mode) may be applied when the output data are noise affected or the output data are very noisy, e.g. where there are measurement errors. In this case, the output data may only with low accuracy represent or be indicative for the system delay. In particular, by analyzing the noisy output data and the input data, it may be difficult according to conventional procedures to determine the delay introduced by the system. However, when the extreme of the objective function is found, the delay may also be determined in the case where the output data are relatively noisy.

According to an embodiment of the present invention, the first phase spectrum and second phase spectrum is determined only at dominant frequencies, wherein the first system input signal represented in a frequency space comprises amplitudes at the dominant frequencies that are higher than a threshold, the threshold being in particular between 0.3 and 0.8 of a highest amplitude of the first system input data when represented in the frequency space.

Dominant frequencies may represent frequencies which have high amplitudes in the first system input signal when the first system input signal is represented in frequency space or Fourier space.

Frequencies other than the dominant frequencies may have little influence on the determination of the delay, since its associated amplitudes of the first system input data may be relatively low. By restricting the frequencies at the dominant frequencies, computational efforts may be reduced without sacrificing much of the achievable accuracy of the determination of the delay.

According to an embodiment of the present invention, the second phase spectrum at a first frequency is computed as a sum of a logarithm of the absolute value of the estimated transfer function at a second frequency multiplied by a sum of two trigonometric functions each depending on the first frequency and the second frequency, the sum running across the second frequency, in particular only comprising the dominant frequencies.

The sum may run across discrete or continuous frequencies. When the input data and/or the output data are periodic, the input data and/or output data may be expanded in a Fourier sum comprising discrete frequencies or frequencies at discrete positions which may be integer multiples of a basic frequency, such as the oscillation frequency of the input data. Thereby, the method may be simplified. The trigonometric functions may in particular be the cot-function. The second phase spectrum estimate may be computed by taking the Hilbert transform of the amplitude spectrum obtained from the input-output data. This may provide an estimate of the phase spectrum which includes no effects of the time delay of the system.

According to an embodiment of the present invention, finding the extreme comprises varying the delay across a range of values, wherein prior knowledge is used for defining the range of values.

Since the delay is found by direct evaluation of a cost function for a range of values, the range can be chosen e.g. between zero and a delay value much larger than the expected value.

According to an embodiment of the present invention, the objective function comprises a sum of a trigonometric function having an argument depending on a difference between the first phase spectrum and the second phase spectrum at a particular frequency, the sum running across different frequencies, in particular only comprising the dominant frequencies.

The trigonometric function within the objective function may for example be the cos-function or the sin-function. The argument of the trigonometric function may comprise three terms, in particular the cos of the phase of the estimated transfer function, the second phase spectrum and the delay times the considered frequency. Thereby, the method may be easily implemented and simplified.

According to an embodiment of the present invention, the argument is given by the difference between the first phase spectrum and the second phase spectrum from which the frequency multiplied by the delay is subtracted. This may stem from the fact that the phase spectrum estimated directly from the data includes time delay information, while the phase estimate obtained from the Hilbert transform of the amplitude spectrum may not. Therefore, the difference between these spectral estimates may be the phase contribution from the time delay.

Finding the extreme of the objective function may in particular comprise maximizing the objective function, in particular when the trigonometric function within the objective function is the cos-function.

Thereby, maximizing the objective function and thereby finding the delay may be simplified.

According to an embodiment of the present invention, the different frequencies are within a frequency range defined to be between 0.2 and 1.0 times a basic frequency of the input data produced by the relay controller.

The frequency range may in general be the frequency range provided by the Fourier transform, i.e. from 0 to half of the sampling frequency of the data.

In particular, the objective function may be evaluated at at least one frequency, in particular a main frequency of the dominant frequencies. Evaluating the objective function at more than one frequency may improve or enhance the accuracy of the determination of the delay.

According to an embodiment of the present invention, in the sum, frequencies at which amplitudes of the Fourier transformed input data are lower than a threshold are weighted lower than frequencies at which amplitudes of the Fourier transformed input data are higher than the threshold.

Thereby, a simple scheme for selecting frequencies may be provided which may simplify evaluation and maximizing the objective function.

According to an embodiment of the present invention, a weighting of different summands in the sum of differences is based on coherence functions. Weighting the different summands may also improve the accuracy of the method.

According to an embodiment of the present invention, estimating the transfer function comprises: determining a first function as a Fourier transform of a cross-correlation between the input data and the output data, determining a second function as a square of a Fourier transform of the input data, and computing the estimated transfer function as being proportional to the first function divided by the second function.

The cross-correlation between the input data and the output data may be an integral of a product, the product comprising the input data and shifted (in time) output data. Thereby, estimating the transfer function may be enabled and simplified.

According to an embodiment of the present invention, the relay controller receives the system output data and produces an output signal that flips between two states, wherein the states are switches when the received system output changes sign (or crosses a border or a particular nominal output value).

The output signal of the relay controller may flip between the two states when the received first system output crosses a nominal system output, for example zero. In particular, the relay controller may produce a square wave signal which may be supplied to the system and the system may output first system output data varying according to a smooth curve, such as a curve close or similar to a sine curve or a cosine curve. In particular, the first system output data may at least oscillate between an upper and a lower limit value and may in particular cross a line in the middle between the upper limit value and the lower limit value. In particular, this line in the middle between the upper limit value and the lower limit value may represent a nominal (or mean or average) output value. The relay controller (first controller) may switch its output (which is supplied to the system) when the output data crosses the line between the upper limit value and the lower limit value of the output data.

It should be understood that features which have been disclosed, described, applied to or employed for a method for determining a performance measure may also be applied to an arrangement for determining a performance measure according to an embodiment of the present invention and vice versa.

According to an embodiment of the present invention, it is provided an arrangement for determining a performance measure of a second controller adapted to control a system, the method comprising an input section adapted to obtain first system input data and first system output data, while a first controller receives the first system output data and supplies first controller output to the system as the first system input data, the first controller comprising a relay controller; a processor adapted to estimate a system delay between the first system input data and the first system output data using a Hilbert transform relations method based on the first system input data and the first system output data; wherein the input section is further adapted to obtain second system output data, while the second controller receives a difference between second system output data and reference data and supplies second controller output to the system as second system input data; wherein the processor is further adapted to estimate a minimum system output variance based on the estimated system delay and an impulse response of the system and to estimate the performance measure based on the estimated minimum system output variance and a variance of the second system output data.

The technical system may be any technical system which receives a first/second system input signal (such as an electrical and/or optical and/or wireless signal, in particular used for controlling an actuator of the system, such as a pump, a heater, a compressor, a motor, etc.) and generates a first/second system output signal, such as a pressure value, a flow rate value, a temperature value or the like. The first/second system input data may be represented by an electrical and/or optical signal or by an electromagnetic wave.

The arrangement or the processor may for example comprise a (semiconductor) circuit which may in particular be programmable, using a conventional computer language, such as C, C++, JAVA, Perl, Python or the like.

The arrangement may, in the first configuration, be connected for obtaining the first system input data to the first (relay) controller and may be connected for obtaining the first system output data to a system output terminal. The arrangement may, in the second configuration, be connected for obtaining the second system input data to the second controller and may be connected for obtaining the second system output data to a system output terminal.

The processor may perform all kinds of computations, including Fourier transformation, Laplace transformation, z-transformation, cross-correlation, maximizing procedures, summation methods and so on. The found system delay may be output and/or may be stored in an electronic storage. Further, based on the determined delay, other tuning parameters of the controller which may be designed for controlling the system may then be determined using the processor.

Any a priori information on the system delay may be useful for the system identification procedures. The accurate value of the time delay may be very much essential to estimate minimum variants and thereby Harris index. Based on the value of the Harris index, poorly performing control loops may be identified and immediately considered for route course diagnosis. Although relay-based auto tuning methods is in practice for more than two decades, the data obtained from this has not been used for ranking of control loops which here should be treated novel. According to an embodiment a tool for performance assessment of control loops may be developed by knowing the value of the time delay.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 schematically illustrates a block diagram of a method for determining a performance measure of a controller according to an embodiment of the present invention;

Fig. 2 schematically illustrates a first configuration for obtaining first system input data and first system output data as used in the method illustrated in Fig. 1;

Fig. 3 schematically illustrates a second configuration for obtaining second system output data to be used in the method as illustrated in Fig. 1; and

Fig. 4 schematically illustrates an arrangement for determining a performance measure of a controller according to an embodiment of the present invention which is adapted to carry out a method for determining a performance measure of a controller, for example the method illustrated in Fig. 1.

Detailed Description

The illustration in the drawings is in schematic form.

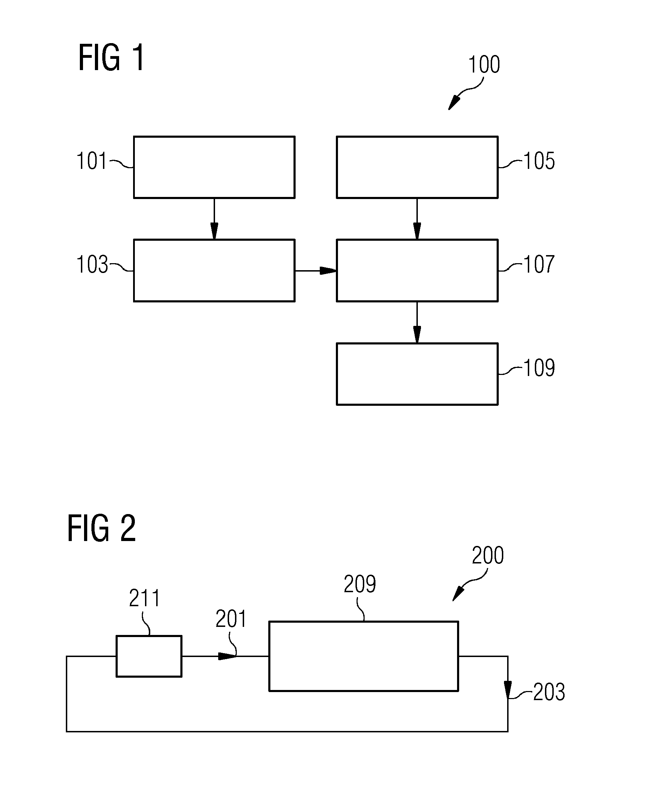

Fig. 1 illustrates a block diagram of a method 100 for determining a performance measure of a controller according to an embodiment of the present invention. In the method step 101, in a first mode or first configuration, first system input data and first system output data are obtained under relay-based tune mode, i.e. when a relay controller is arranged upstream of a system to be controlled, as is for example illustrated in Fig. 2.

In particular, in this first configuration in method step 101, a first controller (comprising a relay controller) receives the first system output data and supplies first controller output to the system as the first system input data.

The first system input data and the first system output data are further on used during the method step 103 to estimate a system delay D between the first system input data and the first system output data using a Hilbert transform relations method which uses or is based on the first system input data and the first system output data having been collected in the method step 101.

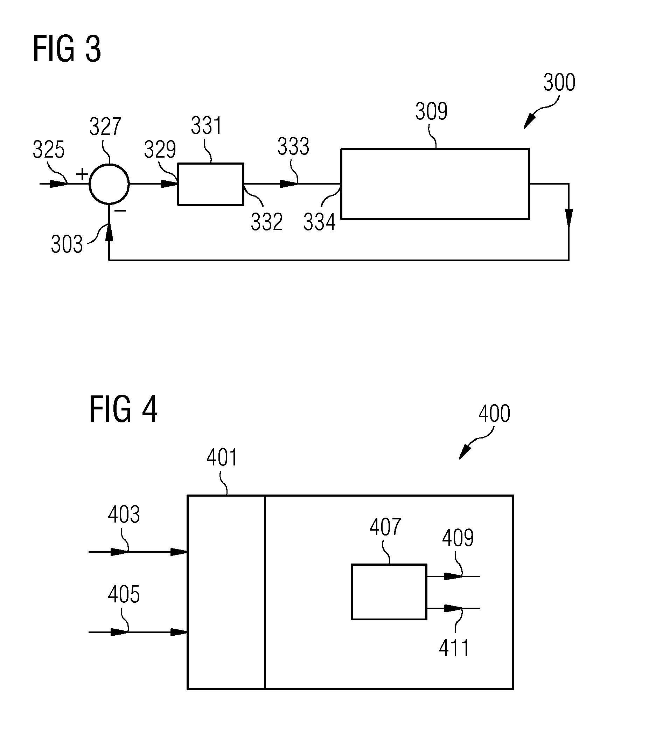

In the method step 105, in a second mode or second configuration, as is for example illustrated in Fig. 3, second system output data (and also optionally second system input data) are obtained under routine operating conditions, i.e. while the second controller receives a difference between second system output data and reference data and supplies second controller output to the system as second system input data. In particular, the second system output data are later on, in method step 109 used to calculate an actual variance of the second system output data. In between the method steps 105 and 109 is the method step 107 which estimates, based on the estimated system delay estimated in method step 103, and also based on an impulse response of the system, minimum system output variance. In particular, in the method step 107, a higher order autoregressive model may be fit to the impulse response of the system and a minimum variance, i.e. minimum system output variance, is estimated using the time delay. In particular, the minimum variance is determined or computed using the following equation

$$\sigma_{MV}^2 = \sum_{i=0}^{\tau-1} e_i^2 \sigma_\varepsilon^2$$

Thus, the minimum variance estimate is found by analyzing an impulse response, where $\tau$ is the system time delay between input (u) and output (y) of the system.

Thereby, the first coefficient of the impulse response, $e_0$ is normalized to unity. The estimate of the actual output variance $\sigma_y^2$, may be directly estimated from the collected output samples (collected in method step 105) using the standard relation for the variance. From the minimum variance estimate and the actual output variance, the Harris index $\eta$ can be found according to the following equation

$$\eta = \sigma_{MV}^2 / \sigma_y^2$$

where $\sigma_{MV}^2$ is obtained using the minimum variance controller applied to an estimated time series model from measured output data and $\sigma_y^2$ is the actual system output variance.

Fig. 2 illustrates the first configuration or first mode, in order to collect the process first input/output data under relay-based tune mode in the method step 101 illustrated in Fig. 1.

Upstream of the system 209, a relay controller 211 is arranged which produces first controller output 201 which is provided to the system 209 as the first system input data. The system 209 outputs first system output data 203 which are supplied as input to the relay controller 211.

Fig. 3 schematically illustrates a second configuration, in order to collect second input/output data under routine operating conditions as is performed in method step 105 illustrated in Fig. 1.

The second controller 331 thereby controls the system 309. The system 309 outputs second system output data 303, while the second controller 331 receives a difference 329 between second system output data 303 and reference data 325, wherein the difference 329 is obtained using a subtraction element 327.

The second controller 331 outputs second controller output 333 which is supplied to the system 309 as second system input data 334. In particular, the second system output data 303 may then be used to estimate an actual variance $\sigma_y^2$ of the second system output data 303 which is required in order to calculate the Harris index $\eta$ as is defined above.

Fig. 4 schematically illustrates an arrangement 400 for determining a performance measure according to an embodiment of the present invention. The arrangement 400 comprises an input section 401 which is adapted to obtain first system input data and first system output data collectively labelled with reference sign 403, for example the first system output data 203 illustrated in Fig. 2.

The input section 401 is further configured to obtain second system output data 405, for example the second system output data 303 as illustrated in Fig. 3.

The arrangement 400 further comprises a processor 407 which is adapted to estimate a system delay $\tau$ (409) between the first system input data and the first system output data using a Hilbert transform relations method based on the first system input data and the first system output data, as in method step 103 illustrated in Fig. 1. The processor 407 is further configured to estimate a minimum system output variance, such as the quantity $\sigma_{MV}^2$ as defined above based on the estimated system delay $\tau$ (also referred to as D) and an impulse response of the system, such as system 209, 309 illustrated in Figs. 2 and 3, respectively.

Further, the processor 407 is adapted to estimate the performance measure 411 (e.g. $\eta$ as defined above) based on the estimated minimum system output variance $\sigma_{MV}^2$ and a variance $\sigma_y^2$ of the second system output data. The performance measure 411 may in particular be output from the arrangement 400.

The coefficients of the impulse response may for example be obtained using the following formula

$$\Psi(z^{-1}) = (1 + \psi_1 z^{-1} + \psi_2 z^{-2} + \cdots) = C(z^{-1}) / A(z^{-1})$$

Herein, the coefficients ei are denoted as $\psi_l$, z is the coordinate in the z-space . The fitting may be performed in the z-space, i.e. the space of the z-transform.

Embodiments of the present invention may allow estimating the performance of a controller in an effective manner.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for determining a performance measure ($\eta$) of a second controller (331) adapted to control a system (209,309), the method comprising:

   obtaining (101) first system input data (201) and first system output data (203), while a first controller (211) receives the first system output data (203) and supplies first controller output (201) to the system (209) as the first system input data, the first controller (211) comprising a relay controller;
   estimating (103) a system delay ($\tau$) between the first system input data (201) and the first system output data (203) using a Hilbert transform relations method (103) based on the first system input data (201) and the first system output data (203);
   obtaining (105) second system output data (303), while the second controller (331) receives a difference (329) between second system output data (303) and reference data (325) and supplies second controller output (333) to the system (309) as second system input data;
   estimating (107) a minimum system output variance ($\sigma_{MV}^2$) based on the estimated system delay ($\tau$) and an impulse response of the system; and
   estimating (109) the performance measure ($\eta$) based on the estimated minimum system output variance ($\sigma_{MV}^2$) and a variance ($\sigma_y^2$) of the second system output data.

2. Method according to claim 1, wherein the performance measure ($\eta$) comprises a Harris Index as a ratio between the estimated minimum system output variance ($\sigma_{MV}^2$) and the variance ($\sigma_y^2$) of the second system output data.

3.  Method according to claim 1 or 2, wherein estimating the minimum system output variance ($\sigma_{MV}^2$) comprises:

    fitting an autoregressive model to the impulse response of the system, to obtain impulse response coefficients;
    summing squares of the impulse response coefficients up to a coefficient associated with the estimated system delay.

4.  Method according to one of the preceding claims, wherein the impulse response is obtained by supplying an impulse input, in particular in a form of a delta peak, as input to the system.

5.  Method according to one of the preceding claims, wherein the Hilbert transform relations method comprises:

    estimating from the second input data and the second output data a transfer function ($G(\omega)$) associated with the system, the transfer function describing the effect of the system on the second input data to result in the second output data;
    determining a first phase spectrum ($\phi(\omega)$) as the phase of the estimated transfer function ($G(\omega)$);
    determining a second phase spectrum ($\arg G(\omega)$) based on an absolute value of the estimated transfer function;
    finding an extreme of an objective function ($J(\tau)$) to obtain the system delay ($\tau$), the objective function depending on a difference between the first phase spectrum ($\phi(\omega)$) and the second phase spectrum ($\arg G(\omega)$);

6.  Method according to one of the preceding claims, wherein first phase spectrum ($\phi(\omega)$) and second phase spectrum ($\arg G(\omega)$) is determined only at dominant frequencies, wherein the input signal represented in a frequency space comprises amplitudes at the dominant frequencies that are higher than a threshold, the threshold being in particular between 0.3 and 0.8 of a highest amplitude of the input data when represented in the frequency space.

7.  Method according to one of the preceding claims,
    wherein the second phase spectrum ($\arg G(\omega)$) at a first frequency ($\omega_l$) is computed as a sum of a logarithm of the absolute value of the estimated transfer function at a second frequency ($\omega_k$) multiplied by a sum of two trigonometric functions each depending on the first frequency ($\omega_l$) and the second frequency ($\omega_k$), the sum running across the second frequency ($\omega_k$), in particular only comprising the dominant frequencies.

8.  Method according to one of the preceding claims,
    wherein finding the extreme comprises:

    varying the system delay ($\tau$) across a range of values, wherein prior knowledge is used for defining the range of values.

9.  Method according to one of the preceding claims, wherein the objective function ($J(\tau)$) comprises a sum of a trigonometric function having an argument depending on a difference between the first phase spectrum and the second phase spectrum at a particular frequency, the sum running across different frequencies, in particular only comprising the dominant frequencies.

10. Method according to claim 9,
    wherein, in the sum, frequencies at which amplitudes of the Fourier transformed input data are lower than a threshold are weighted lower than frequencies at which amplitudes of the Fourier transformed input data are higher than the threshold.

11. Method according to one of claims 5 to 10,
    wherein estimating the transfer function ($G(\omega)$) comprises:

    determining a first function ($P_{uy}(\omega)$) as a Fourier transform of a cross-correlation between the input data and the output data,
    determining a second function ($P_{uu}(\omega)$) as a square of a Fourier transform of the input data;
    computing the estimated transfer function ($G(\omega)$) as being proportional to the first function divided by the second function.

12. Method according to one of the preceding claims, wherein the relay controller (211) receives the first system output data (303,203) and produces first controller output (201) that flips between two states (313,315), wherein the states switch when the received first system output data (303) changes sign.

**13.** Arrangement (400) for determining a performance measure ($\eta$) of a second controller (331) adapted to control a system (209,309), the method comprising:

an input section (401) adapted to obtain first system input data (201,403) and first system output data (203,403), while a first controller (211) receives the first system output data (203) and supplies first controller output (201) to the system (209) as the first system input data, the first controller (211) comprising a relay controller;
a processor (407) adapted to estimate a system delay ($\tau$) between the first system input data (201) and the first system output data (203) using a Hilbert transform relations method based on the first system input data (201) and the first system output data (203);
wherein the input section (401) is further adapted to obtain second system output data (303,405), while the second controller (331) receives a difference (329) between second system output data (303) and reference data (325) and supplies second controller output (333) to the system as second system input data;
wherein the processor (407) is further adapted

to estimate a minimum system output variance ($\sigma_{MV}^2$) based on the estimated system delay ($\tau$) and an impulse response of the system and
to estimate the performance measure ($\eta$) based on the estimated minimum system output variance ($\sigma_{MV}^2$) and a variance ($\sigma_y^2$) of the second system output data.

FIG 1

FIG 2

## FIG 3

## FIG 4

Europäisches
Patentamt
European
Patent Office
Office européen
des brevets

# EUROPEAN SEARCH REPORT

**Application Number**

EP 14 15 2501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 838 561 A (OWEN JAMES GARETH [CA]) 17 November 1998 (1998-11-17) * column 8, line 1 - column 9, line 20 * ----- | 1,13 | INV. G05B13/02 |
| A | WO 97/29410 A1 (NORANDA INC [CA]) 14 August 1997 (1997-08-14) * page 17, line 15 - page 15, line 1 * ----- | 1,13 | |

**TECHNICAL FIELDS SEARCHED (IPC)**

G05B

The present search report has been drawn up for all claims

| Place of search | Date of completion of the search | Examiner |
|---|---|---|
| The Hague | 23 April 2014 | Kelperis, K |

EPO FORM 1503 03.82 (P04C01)

## ANNEX TO THE EUROPEAN SEARCH REPORT
## ON EUROPEAN PATENT APPLICATION NO.

EP 14 15 2501

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2014

| Patent document cited in search report | | Publication date | Patent family member(s) | | Publication date |
|---|---|---|---|---|---|
| US 5838561 | A | 17-11-1998 | NONE | | |
| WO 9729410 | A1 | 14-08-1997 | AT | 237833 T | 15-05-2003 |
| | | | AU | 1538097 A | 28-08-1997 |
| | | | CA | 2242064 A1 | 14-08-1997 |
| | | | DE | 69720963 D1 | 22-05-2003 |
| | | | DE | 69720963 T2 | 12-02-2004 |
| | | | EP | 0879446 A1 | 25-11-1998 |
| | | | JP | 2000503788 A | 28-03-2000 |
| | | | US | 5796606 A | 18-08-1998 |
| | | | WO | 9729410 A1 | 14-08-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13153101 A